# EUROPEAN PATENT SPECIFICATION

(11) **EP 1 335 545 B1**
(45) Date of publication and mention of the grant of the patent: **18.04.2007**
(21) Application number: 03290233.0
(22) Date of filing: 30.01.2003
(51) Int. Cl.: H04L 12/56, H04L 12/28

(54) **Method for radio link adaptation in a network with contention-based medium access**
Verfahren zur Anpassung einer Funkverbindung in einem Netzwerk mit auf Konkurrenzbetrieb basiertem Mediumzugriff
Méthode d'adaptation de liaison sans fil dans un réseau avec accès basé sur la gestion de contention

(30) Priority: 01.02.2002 EP 02290236
(43) Date of publication of application: 13.08.2003
(73) Proprietor: Thomson Licensing, 92100 Boulogne-Billancourt (FR)
(72) Inventor: Doré, Renaud, 35000 Rennes (FR); Jeanne, Ludovic, 35200 Rennes (FR); Lopez, Patrick, 35450 Livré s/Changeon (FR); Fontaine, Patrick, 35700 Rennes (FR)
(74) Representative: Kohrs, Martin

(56) References cited:
- US-A- 6 097 703
- FRAGOULI C ET AL: "Controlled multimedia wireless link sharing via enhanced class-based queuing with channel-state-dependent packet scheduling" INFOCOM '98. SEVENTEENTH ANNUAL JOINT CONFERENCE OF THE IEEE COMPUTER AND COMMUNICATIONS SOCIETIES. PROCEEDINGS. IEEE SAN FRANCISCO, CA, USA 29 MARCH-2 APRIL 1998, NEW YORK, NY, USA,IEEE, US, 29 March 1998 (1998-03-29), pages 572-580, XP010270400 ISBN: 0-7803-4383-2
- CROW B P ET AL: "IEEE 802.11 WIRELESS LOCAL AREA NETWORKS" IEEE COMMUNICATIONS MAGAZINE, IEEE SERVICE CENTER. PISCATAWAY, N.J, US, vol. 35, no. 9, 1 September 1997 (1997-09-01), pages 116-126, XP000704431 ISSN: 0163-6804

## Description

The invention concerns a method for testing and modifying parameters of a radio link in a network such as an IEEE 802.11 network, which uses a medium access mechanism based on contention.

In a wireless network, two devices communicating over a radio link may be required to dynamically configure their transmission parameters. Such parameters may include in particular the emitter's active antenna sector or element in case of multi-sectored antenna. Another parameter that may be taken into account is the physical mode, which comprises choice of channel coding and of modulation.

Selecting the proper parameters has a direct influence on the robustness and the overall performance of a radio link.

The European patent application 01402592.8, filed on October 10, 2001 in the name of Thomson Licensing S.A. and entitled 'Methods and devices for radio link adaptation' describes methods and devices adapted to carry out radio link evaluation in a centralized network, such as a wireless network based on ETSI BRAN HiperLAN 2. In this application, a receiver mobile terminal triggers transmission of predetermined test data from a known transmitter mobile terminal, over an identified connection and using predetermined transmission parameters.

Other networks, such as for example a network based on the IEEE 802.11 standard, lack a centralized controller in at least certain network configurations. In a mode called Distributed Coordination Function (DCF) mode, IEEE 802.11 implements a Carrier Sense Medium Access - Collision Avoidance (CSMA - CA) mechanism to regulate access to the radio medium. According to this mechanism, a mobile terminal wishing to transmit carries out the following steps:
- It listens to the medium to determine whether it is busy (i.e. whether another mobile terminal is transmitting).
- Transmission is authorized only after a minimum idleness period.
- If the medium is busy, the mobile terminal waits for the end of the busy period, waits for the minimum idleness period and enters into a random back-off period, after which it tries to transmit.

As a consequence, a mobile terminal is in general not informed in advance of the identity of the mobile terminal sending data frames. If transmission is bad, the receiving mobile terminal may never know by which mobile terminal data was transmitted. This renders the radio link evaluation process more difficult.

D1, US-A-6 097 703 (Larsen David Victor et Al), discloses a method of transmitting data between originating and destination stations in a multistation communication network. It focuses on choosing the right pass in a multi hop communication by probing the quality of the radio link between an emitter and destination stations.

The invention concerns a method according to claim 1.

The invention allows a first terminal to decide with which second terminal a radio link evaluation is to be carried out, and at what time. The probing itself is achieved by triggering at the right time the transmission of predetermined data by the second terminal, followed by an evaluation of the received data by the first terminal. The triggering is achieved using the virtual carrier sense mechanism.

It is to be noted that the step of setting a parameter value may for certain parameters by carried out after the step of message generation, e.g. when the parameter is an antenna element, this element may be rendered active during or after message transmission, but before reception of the predetermined response.

According to the described embodiments, the predetermined response is an acknowledgment packet.

According to the described embodiments, the network is an IEEE 802.11 network.

According to a first embodiment, the message comprises a Request to Transmit packet and no payload data.

According to the first embodiment, the parameter is an antenna sector and/or element and/or a data rate

According to a second embodiment, the message comprises a data packet of the null function type.

According to the second embodiment, the parameter is the physical mode and/or the antenna sector or element and/or a data rate.

According to a variant embodiment of the first or the second embodiment, the first terminal sends the message to the second terminal in a fragmented mode comprising the transmission of fragments of the message in a single burst and where each fragment is acknowledged by the second terminal, and wherein the parameter value is varied between acknowledgements.

Other characteristics and advantages of the invention will appear through the description of an embodiment of the invention, explained with the help of the enclosed figures, among which:
Figure 1 is a diagram of a network according to the present embodiment, and indicating message exchanges during the process according to the present embodiment.
Figure 2 is a flowchart of the process according to a first embodiment of the invention.
Figure 3 is a flowchart of the process according to a second embodiment.

The first embodiment mainly focuses on the evaluation of a radio link when varying the active antenna element for a spatial diversity antenna or successive antenna sectors of a receiving terminal. A second embodiment also concerns the variation of the physical mode, either alone or in addition to the variation of the antenna element. Other parameters (such as automatic gain control gain, frequency offset...) may of course also be varied, and the invention is not limited to the parameters described here.

The present embodiment is based on a network compliant with IEEE 802.11 and its different variants. More information about IEEE 802.11 is available from the IEEE.

In what follows, the terminal that initiates the evaluation process will be called the 'receiver' terminal or the 'probing' terminal, while the terminal that is requested to send data will be called the 'transmitting' terminal or the 'probed' terminal.

IEEE 802.11 offers a medium access mechanism called 'virtual carrier sense' (as opposed to physical carrier sense), which is a development of the CSMA/CA mechanism. One implementation of the virtual carrier sense mechanism is also referred to as the RTS/CTS mechanism, RTS standing for Ready To Send and CTS for Clear To Send. These are the designations of two short control packets used in this mechanism, as will now be described. The use of RTS/CTS is optional, but it allows the probing terminal to be sure, in case of bad reception of an acknowledgment frame (ACK frame) or an altogether missing acknowledgment from the transmitting terminal, that this is not due to a collision with data transmitted by a third terminal.

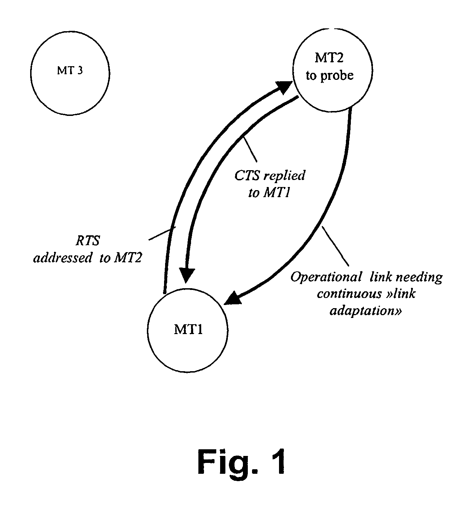

The RTS/CTS mechanism allows making a reservation of the medium for a specified amount of time for an impending transmission. Figure 1 illustrates a network comprising a mobile terminal MT1, a mobile terminal MT2 and a mobile terminal MT3. An operational link exists between MT1 and MT2. This link is used to send - for example - a video stream from MT2 to MT1.

Let us suppose that, for the purpose of testing the link going from MT2 to MT1, MT1 wants to make a reservation for a transmission to MT2 using the RTS/CTS mechanism. MT1 first sends an RTS packet to MT2, after a minimum period of idleness of the medium referred to as 'DIFS', standing for Distributed InterFrame Space. This RTS packet contains the source address (MT1), the destination address (MT2) and the duration of the transaction to be made (i.e. the duration of the packet to be transmitted and of the associated acknowledgment). If the medium is free, MT2 will respond with a CTS packet, containing MT2's address and the same duration as in the RTS packet, from which the duration of the CTS packet has been subtracted.

All mobile terminals receiving the RTS and/or the CTS packet will set a parameter called virtual carrier sense indicator (call network allocation vector or 'NAV') for the given duration. This indicator is used by these terminals (e.g. terminal MT3) in conjunction with the physical carrier sense. The medium is seen as idle only when neither mechanism shows an activity on the medium, and the medium is thus unusable but for MT1 (for the transmission of data) and MT2 (for the acknowledgment of the data).

Once MT1 receives the CTS packet, it sends a data frame. This data frame will be acknowledged by MT2 using an ACK frame. Another DIFS period follows (unless the fragmented mode is used).

The RTS, CTS, ACK and data frames are separated by an idleness period called 'SIFS', standing for Short InterFrame Space.

According to the present invention, this mechanism is used to test the radio link between MT1 and MT2. The content of the data field is of no importance: it is not used during the test. Preferably, the payload of the data field is empty ('data null function') to reduce the length of the RTS/CTS/data frame/ACK train and thus reduce the amount of bandwidth required for the test. The duration field in the RTS packet indicates the length of the CTS, the empty data packet, + the acknowledgment and their SIFS intervals.

The quality test of the radio link is carried out by MT1 on the ACK frame received from MT2. MT1 is aware of the source of the ACK frame, since it selected MT2 using the RTS frame. MT1 also knows when this field is going to be received, knowing the duration of the CTS frame, the data frame and the SIFS intervals. The CTS frame is not used because if the probing terminal uses the CTS for testing another receiver configuration, and if the CTS frame is not correctly received (or not at all), the probing terminal cannot determine if this is due to a collision when sending its RTS or when receiving the CTS, or if it is due to a bad receiver configuration. In the absolute, it is possible to make a test using the CTS frame, but as indicated, the ACK frame is preferred.

The format of the ACK frame is given in table 1:

**Table 1**

| Field | PLCP Preamble | PLCP Header | Frame control | Duration | Receiver address | Checksum |
|---|---|---|---|---|---|---|
| Length | Synchronization | 3+2 bytes | 2 bytes | 2 bytes | 6 bytes | 4 bytes |

The content of all fields is known in advance by MT1, which can easily test for errors. The quality criterion used according to the present embodiment is the received signal power. According to a variant embodiment, the criterion is the sum of the received signal power, to which one adds the indicator described in the French national patent application 0115892 filed on December 6, 2001 in the name of THOMSON Licensing SA, and based on measurements of individual carriers of an OFDM-modulated signal.

According to the present embodiment, each probing terminal implements a table for holding parameters relating to the radio link evaluation process. According to the present embodiment, the table of a terminal contains the following data for each terminal to be probed:
(a) An identifier of the probed terminal (e.g. the medium access control (MAC) number of the probed terminal)
(b) The antenna element currently used and a radio link quality criterion value (e.g. a bit error rate estimate, a power level estimate, or a value of a function combining several criteria values)

And optionally,
(c) The next antenna element to be tested
(d) Any other parameter useful for the receiving function: last known frequency offset, last known AGC level...

Although the last item does not concern antenna diversity proper, it improves set-up speed of the right reception parameters.

The content of the table for a given terminal is updated every time the receiving terminal correctly performs a probe.

The steps taken by MT1 to probe the incoming link with MT2 can be summarized as follows:
- In a first step, the currently valid antenna element identity and the quality criterion value are read and stored in a register.
- In a second step, MT1 sends the RTS frame as specified above.
- In a third step, MT1 waits for the CTS frame sent by MT2.
- In a fourth step, MT1 sends the Data NULL packet to MT2 and selects an antenna element to be tested.
- In a fifth step, MT1 waits for the ACK frame to be sent by MT2 (MT1 sends no data frame).
- In a sixth step, MT1 evaluates the quality criterion based on ACK.
- In a seventh step, MT1 compares the quality criterion to the one stored in the register. If the quality is higher, the new antenna element identity and the quality criterion value are memorized in step 8.
- In a ninth step, the steps two to seven are repeated if all antenna elements have not been tested.
- In a tenth and last step, MT1 verifies whether the antenna element used for the operational link needs to be changed. If yes, the necessary steps are taken, and the table is updated.

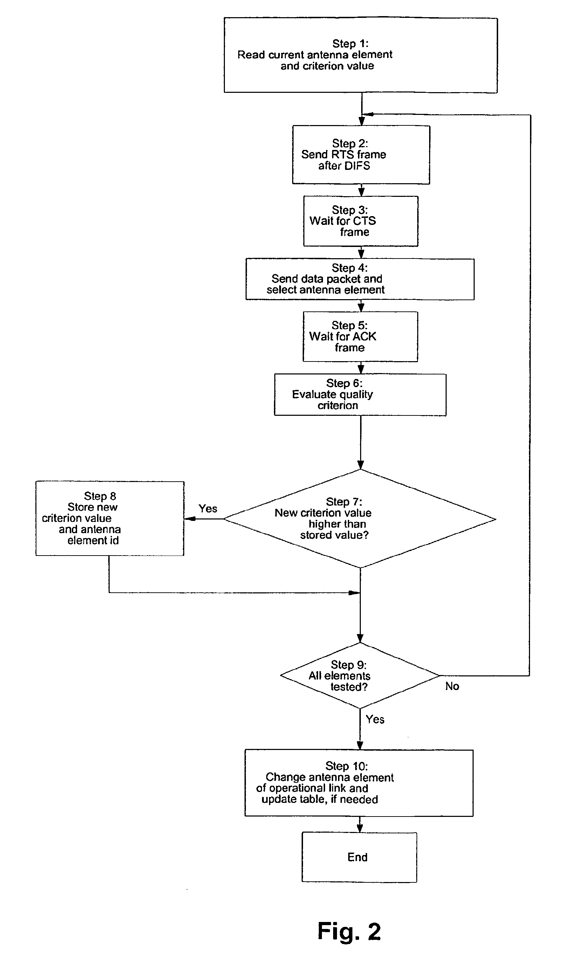

This process is illustrated by figure 2.

The probing can be carried out without having the existing operational link incur any disturbance. Of course, the process may also be carried out for probing a terminal that does not have an operational link with the probing terminal, in order to determine in advance the right parameter values to be used.

Given the duration of a single probe and the bandwidth of the network, one can reasonably carry out probes at the frequency of 100 Hz per receiver without wasting a significant amount of network resources.

In the first embodiment, the RTS/CTS mechanism is used to generate an acknowledgment from the terminal to be probed. In IEEE 802.11, the choice of the physical mode of the CTS frame is limited in the frame of the RTS/CTS mechanism (although this need not be the case of other types of networks). Indeed, a very robust mode is used, such as BPSK 1/2.However, the data rate of the data frame or the ACK frame can be freely chosen, independently from the RTS/CTS data rate.

The second embodiment does not use the RTS/CTS mechanism for requesting the medium, but directly uses the acknowledgment of terminal MT2 provided in response to an empty data packet sent by MT1. There is no restriction on the physical mode. The empty data packet is a data packet in which the type field is equal to 'Null function', meaning that the packet does not contain any payload. Not using the RTS/CTS packets saves some bandwidth (the RTS and CTS frames representing 100 µs in the QPSK½ mode).

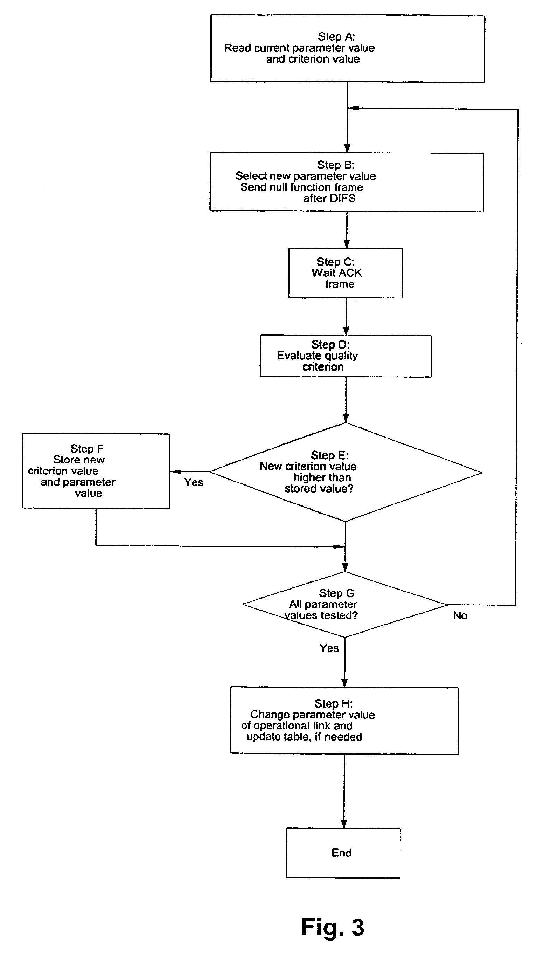

The process carried out by MT1 for testing different antenna elements is shown by the flowchart of figure 3. This flowchart is applicable to probing using any variable parameter, be it the antenna element, or the physical mode or another parameter.

As a first step (A), the parameter value currently being used on the operational link (if any) is read, as well as the corresponding quality criterion value. The two values are stored in a register.

As second step (B), A parameter value to be tested is selected and set and a null function data frame is sent by MT1 to MT2, after a DIFS period. Note that if the parameter to be changed is purely a parameter to be modified by the receiver (such as the receiver antenna element, receiver frequency offset...), it can be set during or after sending the null function data frame, but before receiving the ACK frame. If the parameter is such that the transmitter terminal has to be aware of it in order to properly create the ACK frame (for a change in the physical mode or the data rate for example), then this change has to be implemented before sending the null function data frame, since this frame will contain information relating to the changed parameter value.

As a third step (C), MT1 waits for the ACK frame sent by MT2, and as a fourth step (D), evaluates the quality criterion value. In a fifth step (E, E'), MT1 tests whether the criterion value is better than that present in the register. The remaining steps are similar to those of figure 2.

The process of figure 3 may be carried out recursively if several different parameters are to be tested concurrently. In that case, the parameter values for the operational link are changed only when the best overall combination of such parameter values has been found.

A variant version of the second embodiment will now be described. This variant embodiment makes use of the fragmentation mechanism provided by IEEE 802.11. According to this mechanism, MT1 requests sending several data packets as a burst, using a single invocation of the DCF medium access procedure, each data packet being acknowledged separately. According to the variant embodiment, the ACK frame is still used to evaluate the quality criterion value, but the antenna sector or element is changed before each ACK frame. Note however that the physical mode has to be the same for all fragments and ACK frames, but contrary to the RTS/CTS mechanism, it may be freely chosen. The use of the fragmentation mechanism to change the antenna sectors between fragments can also be applied to the first embodiment.

In any of the above embodiments, the bandwidth occupied by the probing process can be compensated by changing the modulation (e.g. BPSK 1/2 to QPSK 1/2 or QPSK 1/2 to 16QAM 1/2).

The probing process according to the first or the second embodiment can be triggered by a variety of events, the following list being non-exhaustive:
(a) when the power-level of the received signal is below a threshold
(b) when the incoming transmission from a given terminal is to be made more robust (for example in case of transmission of an isochronous stream, to avoid interruption of service)
(c) after having received a certain number of packets from a given terminal
The rate of the probing may be a function of (the list being again non-exhaustive):
(a) the channel dynamics, a frequency of 100 Hz being generally seen as sufficient in an environment with moving people
(b) the sensitivity of the physical mode, some physical modes being known to be more sensitive to certain channel characteristics than others (e.g. a physical mode of Viterbi redundancy 3/4 is more sensitive to the channel shape factor than a redundancy of 1/2
(c) the load of the network, since it may be advisable to reduce bandwidth used for probing of this bandwidth is required for other purposes
(d) the average bit rate on the link to be probed, a little used link deserving probably less attention (and thus less frequent probing) than a much used link

The probing may be carried out as a background task by a terminal, priority being given to regular transmission, since in general, there is no need to make the probing perfectly periodic.

Advantageously, adjustment of connection parameters according to embodiment does not disturb existing operational connections, in particular connections conveying video streams. Moreover, channel characteristics may change with time and require readjustment of the transmission connection parameters at unpredictable moments, and evaluation of these characteristics is possible at any time.

## Claims

1. Method for radio link adaptation in a communication network with a contention-based medium access mechanism, said network comprising at least a first terminal and a second terminal, and comprising the steps, for testing the reception by the first terminal (MT1) of data sent by the second terminal (MT2) of:
- setting, by the first terminal, of a parameter value having an influence on the reception or the emission of the transmission from the second terminal to the first terminal;
- generation by the first terminal (MT1) of a message to the second terminal (MT2) for triggering a predetermined response from the second terminal to the first terminal, wherein the predetermined response has a content known in advance to the first terminal and is received at a time known in advance by the first terminal and wherein the predetermined response is received according to conditions defined by the previously set parameter value;
the message generated by the first terminal for triggering a predetermined response from the second terminal to the first terminal is a data packet with no payload data, this message containing information related to the parameter value that the second terminal has to be aware of and the predetermined response is an acknowledgment packet;
- evaluation by the first terminal of a quality criterion value based on a quality test carried out on the predetermined response;
- adaptation of an operational link to use the parameter value if the predetermined response provides a better quality criterion value than a quality criterion value of the operational link.

2. Method according to claim 1, wherein the network is an IEEE 802.11 network.

3. Method according to claim 2, wherein the message comprises a Request to Transmit packet and no payload data.

4. Method according to any of claims 1 to 3, wherein, the parameter refers - to an antenna sector and/or element.

5. Method according to any of claims 1 to 4, wherein the parameter refers to the physical mode and/or a data rate.

6. Method according to claim 5, where the first terminal sends the message to the second terminal in a fragmented mode comprising the transmission of fragments of the message in a single burst and where each fragment is acknowledged by the second terminal, and wherein the parameter value is varied between acknowledgements.

7. Method according to any of claim 2 to 3, wherein the data packet with no payload data is of the null function type.

## Patentansprüche

1. Verfahren zur Anpassung einer Funkverbindung in einem Kommunikationsnetzwerk mit auf Konkurrenzbetrieb basiertem Mediumzugriffsmechanismus, wobei das Netzwerk mindestens ein erstes Endgerät und ein zweites Endgerät umfasst, und zum Testen des Empfangs durch das erste Endgerät (MT1) von Daten, die von dem zweiten Endgerät (MT2) gesendet werden, die folgenden Schritte umfasst:
- Einstellen, durch das erste Endgerät, eines Parameterwerts, der einen Einfluss auf den Empfang oder die Sendung der Übertragung von dem zweiten Endgerät an das erste Endgerät hat;
- Erzeugung, durch das erste Endgerät (MT1), einer Mitteilung an das zweite Endgerät (MT2) zum Auslösen einer vorbestimmten Antwort von dem zweiten Endgerät an das erste Endgerät, wobei die vorbestimmte Antwort einen dem ersten Endgerät im Voraus bekannten Inhalt aufweist und zu einem dem ersten Endgerät im Voraus bekannten Zeitpunkt empfangen wird, und wobei die vorbestimmte Antwort gemäß Bedingungen empfangen wird, die durch den vorher eingestellten Parameterwert definiert sind;
die Mitteilung, die durch das erste Endgerät zum Auslösen einer vorbestimmten Antwort von dem zweiten Endgerät an das erste Endgerät erzeugt wird, besteht aus einem Datenpaket ohne Nutzdaten, wobei diese Mitteilung Informationen enthält, die sich auf den Parameterwert beziehen, von dem das zweite Endgerät Kenntnis haben soll, und die vorbestimmte Antwort besteht aus einem Bestätigungspaket;
- Evaluierung, durch das erste Endgerät, eines Werts des Qualitätskriteriums auf der Basis eines Qualitätstests, der an der vorbestimmten Antwort ausgeführt wird;
- Anpassen einer Betriebsverbindung, um den Parameterwert zu verwenden, wenn die vorbestimmte Antwort einen besseren Wert des Qualitätskriteriums als einen Wert des Qualitätskriteriums der Betriebsverbindung bereitstellt.

2. Verfahren nach Anspruch 1, wobei das Netzwerk aus einem IEEE 802.11 Netzwerk besteht.

3. Verfahren nach Anspruch 2, wobei die Mitteilung eine Aufforderung zum Übertragen eines Pakets und keine Nutzdaten umfasst.

4. Verfahren nach irgendeinem der Ansprüche 1 bis 3, wobei der Parameter einen Antennensektor und/oder ein Antennenelement betrifft.

5. Verfahren nach irgendeinem der Ansprüche 1 bis 4, wobei der Parameter den physikalischen Modus und/oder eine Datenrate betrifft.

6. Verfahren nach Anspruch 5, wobei das erste Endgerät die Mitteilung an das zweite Endgerät in einem fragmentierten Modus sendet, der die Übertragung von Fragmenten der Mitteilung in einem einzigen Bündel umfasst, und wobei jedes Fragment von dem zweiten Endgerät bestätigt wird und wobei sich der Parameterwert zwischen Bestätigungen verändert.

7. Verfahren nach irgendeinem Anspruch 2 bis 3, wobei das Datenpaket ohne Nutzdaten aus dem Nullfunktionstyp besteht.

## Revendications

1. Méthode pour une adaptation d'une liaison sans fil dans un réseau de communication avec un mécanisme d'accès basé sur la gestion de contention, ledit réseau comprenant au moins un premier terminal et un deuxième terminal, et comprenant les étapes, pour tester la réception par le premier terminal (MT1) de données envoyées par le deuxième terminal (MT2), de :
- mise en place par le premier terminal d'une valeur de paramètre ayant une influence sur la réception ou l'émission de la transmission du deuxième terminal au premier terminal ;
- génération par le premier terminal (MT1) d'un message vers le deuxième terminal (MT2) pour déclencher une réponse prédéterminée du deuxième terminal au premier terminal, où la réponse prédéterminée possède un contenu connu à l'avance au premier terminal et est reçue à un moment connu à l'avance par le premier terminal et où la réponse prédéterminée est reçue selon des conditions définies par la valeur de paramètre établie précédemment ;
le message généré par le premier terminal pour déclencher une réponse prédéterminée du deuxième terminal vers le premier terminal est un paquet de données sans données chiffrées, ce message contenant des informations associées à la valeur de paramètre que le deuxième terminal doit connaître et la réponse prédéterminée est un paquet d'accusé de réception ;
- évaluation par le premier terminal d'une valeur de critère de qualité basée sur un test de qualité effectué sur la réponse prédéterminée.
- adaptation d'une liaison opérationnelle pour utiliser la valeur de paramètre si la réponse prédéterminée fournit une meilleure valeur de critère de qualité qu'une valeur de critère de qualité de la liaison opérationnelle.

2. Méthode selon la revendication 1, dans laquelle le réseau est un réseau IEEE 802.11.

3. Méthode selon la revendication 2, dans laquelle le message comprend un paquet Demande de transmission et aucune donnée chiffrée.

4. Méthode selon une quelconque des revendications 1 à 3, dans laquelle le paramètre est un secteur et/ou un élément d'antenne.

5. Méthode selon une quelconque des revendications 1 à 4, dans laquelle le paramètre est le mode physique et/ou un débit de données.

6. Méthode selon la revendication 5, dans laquelle le premier terminal envoie le message au deuxième terminal dans un mode fragmenté comprenant la transmission de fragments du message dans une salve unique et où chaque fragment est accusé réception par le deuxième terminal, et dans laquelle la valeur de paramètre varie entre les accusés de réception.

7. Méthode selon une quelconque des revendications 2 à 3, dans laquelle le paquet de données sans données chiffrées est du type fonction nulle.
